# EUROPEAN PATENT SPECIFICATION

(11) **EP 3 661 713 B1**
(45) Date of publication and mention of the grant of the patent: **27.01.2021**
(21) Application number: 18759541.8
(22) Date of filing: 19.07.2018
(51) Int. Cl.: B29B 17/00, B29B 17/02

(54) **A METHOD FOR PROCESSING THE WASTE CREATED BY RECYCLING PAPER FROM USED BEVERAGE CARTONS AND CORRESPONDING PROCESSING LINE**
VERFAHREN ZUR VERARBEITUNG VON ABFÄLLEN, DIE DURCH RECYCLINGPAPIER AUS VERWENDETEN GETRÄNKENKARTONS HERGESTELLT WERDEN UND ENTSPRECHENDE VERARBEITUNGSLINIE
PROCÉDÉ DE TRAITEMENT DES DÉCHETS CRÉÉS PAR RECYCLAGE DE PAPIER À PARTIR DE CARTONS DE BOISSON USAGÉS ET LIGNE DE TRAITEMENT CORRESPONDANTE

(30) Priority: 02.08.2017 CZ 20170446
(43) Date of publication of application: 10.06.2020
(73) Proprietor: Plastigram Industries A.S., 140 00 Praha 4 (CZ)
(72) Inventor: PELIKAN, Ales, 10400 Praha (CZ)
(74) Representative: Havlík, Michal
(86) International application number: PCT/CZ2018/000034
(87) International publication number: WO 2019/024950

(56) References cited:
- WO-A1-2015/169801
- WO-A1-2016/176752
- US-A- 5 351 895
- US-A- 5 421 526

## Description

### Background of the invention

The subject of the invention is a method for processing and monetizing the waste which is created after paper from used beverage cartons has been recycled and a processing line for implementing this method.

### Description of the prior art

Beverage cartons are made from layers of paper, a few layers of polyethylene and, for aseptic cartons, a layer of aluminium. The paper fibres, which make up most of the packaging material, are recycled in paper mills. During the recycling of the paper fibres, a waste mixture is created consisting of a) multi-layered foils containing a few layers of polyethylene and a layer of aluminium (PE+AL foil), b) polyethylene foil (PE foil), c) non-foil plastics (e.g., lids and screw caps, mostly made of high density polyethylene, HDPE), d) paper fibres (paper recycling is not perfect) and e) other contaminants, e.g. metal (e.g. aluminium cans), plastics (e.g. PET bottles, polystyrene foam) and textiles.

Currently, the level of using waste from recycling paper from beverage cartons is very low - the waste is mostly incinerated or landfilled. The methods for using it can be separated into three groups; processing using heat, mechanical processing and separating the PE+AL foil and recycling them using chemicals.

The most common method for processing the waste from recycling paper from used beverage cartons is to use it as fuel. Other heat processing methods are pyrolysis or gasification.

During mechanical processing, the waste is agglomerated and then made into mostly lower quality plastic products (e.g. roof tiles or drain covers). The waste (or the entire beverage carton, including the paper) can also be compacted and building materials (panels) made from it.

It is also possible to separate the PE+AL foil from the waste and recycle it using chemicals. PE+AL foil can be broken down into their components by dissolving the polyethylene or separating the layers of polyethylene from the aluminium layer. There are a number of known methods for this type of recycling from the current technology available.

Recycling packaging materials based on separating the different layers is known, for example from document WO2015169801. The recycling described in this document involves a separating vat containing a swelling agent and carboxylic acid for separating the metals, plastics and other items. Other steps include filtration and pelletization.

Document CN101891903 describes a method of processing waste packaging from paper, plastic and aluminium foil during which the aluminium is separated from the plastic by soaking the waste in a formic acid solution of concentration 3 - 5 mol/l for a period of 30 - 40 minutes at a temperature of 40 - 60 °C.

The method of recycling layered material comprising combinations of layers of various plastics and aluminium foils described in document CN103328105, involves a reaction with a formic or acetic acid, separating the different layers and washing the waste a number of times. The washing process is performed to separate the different types of material based on their different densities. Document WO9427818 describes a method of treating laminates containing aluminium foils with layers of organic materials to enable the aluminium to be melted together with aluminium from drinks cans.

The disadvantage of the above solutions is that they do not provide a method for separating out the large amounts of contaminates found in the input material. Also, they require a high level of financial costs and in many cases place a similarly large burden on the environment due to the large amount of chemicals they require. A further method for separating non-foil waste from waste material is already known from document WO 2015/169801 A1.

### Summary of the invention

During the processing of the waste created by recycling cellulose from used beverage cartons the flake size of the input material is initially reduced at the preparation and sorting phase and the rough waste comprising heavy material and waste dust is removed with the remaining input material being separated into a fraction comprising mainly non-foil plastics, and a fraction comprising mainly polyethylene foil (PE foil) and foil of at least one layer of polyethylene and one layer of aluminium (PE+AL foil), and during the phase in which the PE+AL foil is separated into polyethylene and aluminium and their sorting, the fraction comprising PE+AL foil undergoes washing in a water-based formic acid solution and is separated into a fraction comprising mainly polyethylene and a fraction comprising mainly aluminium. A fraction comprising mainly PE foil and PE+AL foil is preferably separated into a fraction comprising mainly PE foil and a fraction comprising mainly PE+AL foil.

The method according to the invention preferably also includes:
- an aluminium processing phase in which the fraction containing mainly aluminium is processed into aluminium, and/or
- a polyethylene processing phase in which the fraction containing mainly polyethylene is processed into polyethylene granules, and/or
- a phase for processing non-foil plastics in which the fraction comprising mainly non-foil plastics is cleaned of any admixture and regrind or granules are produced.

The method according to the invention is characterized by a new use, combination and ordering of the machinery, particularly in the first and second phases. In the first phase, this involves ordering recognised machinery in such a way that the sorting of the input material into individual fractions is achieved in a sufficient quality for their further processing, and preferably also using recognised air separating machines for separating PE foil and PE+AL foil before the chemical separation, which significantly reduces the overall costs of recycling the waste and the burden on the environment. Intermediate containers, normally silos, are also placed before certain machines to ensure a regular flow of material which ensures the quality of the subsequent sorted material. The main principle of the second phase is the use of a set of machinery for hot washing, which is similar to the existing machinery used, for example, for washing recycled PET bottles, for separating the PE+AL foil using formic acid.

During the first phase - preparing and sorting the input material - the flake size of input material is reduced in a shredder, after which the heavy contaminantes (e.g. metal, stones and glass) are removed in the air separator, then most of the paper fibre and dust contamination is removed and the moisture of the material is reduced by dry cleaning, which can be performed by a centrifuge drum, for example, after which, non-foil plastic (e.g. lids or caps) are separated from the foil (PE+AL and PE foil) during the air separation step and the material is cut in a cutting mill. Plastics other than foil may be separated before cutting and/or after cutting in the mill. In the next air separation step, the remaining other plastic is separated from the foil (a mixture of PE and PE+AL foil) and in another air separation step the PE foil can be preferably separated from the PE+AL foil.

The result of the first phase processing of the input material is 4 output mixtures: heavy material, the waste from the dry cleaning (comprising mainly paper fibres, various plastics and aluminium dust), a mixture comprising non-foil plastics (mostly high density polyethylene HDPE) contaminated with e.g. other plastics and textiles, and a mixture comprising PE and PE+AL foil.

During the second phase, the phase for separating the PE+AL foil into polyethylene and aluminium and its sorting, the PE+AL foil is processed in a set of machinery for hot washing, a similar set of machinery usually used for hot washing plastics (mainly PET bottles), using a working solution of a water-based formic acid solution for separating the polyethylene layers from the aluminium.

In the advantageous design of the invention, the working solution is a 15 - 30% by weight water-based solution of formic acid (15 - 30% HCOOH and 70 - 85% water, by weight). As opposed to processing PE+AL foil using the prior art technology, it was ascertained that when processing the PE+AL foil adjusted in the first phase of the invention it is advantageous if the amount of working solution is at least ten times the bulk volume of the PE+AL foil. It is beneficial if the ratio of bulk volume PE+AL to working solution is from 1:100 to 1:10. The material from the PE+AL foil is intensively stirred in the working solution for a period of between 5 to 30 minutes, with an advantage of 7 to 15 minutes with a working solution temperature of up to 80 °C, with an advantage of 40 °C to 70 °C.

The main factors influencing the quality of separation of the PE+AL foil into polyethylene and aluminium during the second phase are the concentration of HCOOH, the temperature of the working solution, the duration of the process and the ratio of material to working solution. The required quality of separated PE+AL foil can be achieved with various combinations of the above mentioned parameters, where it mainly applies that the necessary process duration is shorter the higher the temperature and/or HCOOH concentration of the working solution. The HCOOH concentration in the water solution can be 15 - 90 % by weight. A lower concentration is more favourable because the working solution is then cheaper and the vapour contains a lower amount of HCOOH. Furthermore, when a concentration of cca 30% HCOOH is exceeded, the working solution becomes explosive and all machinery must be designed to comply with work in an explosive environment (which significantly increases its cost and standard plastics processing machinery is not manufactured to this specification). The process period must be longer than about 5 minutes. The maximum ratio of material to working solution is influenced by the method and quality of stirring. It is very difficult to achieve a ratio of PE+AL foil to working solution of more than 1:10, and conversely when this ratio is lower than 1:50 the operation of the machinery ceases to be optimal.

The machinery through which the processed material passes in phase II includes a mixing screw, a reaction tank, a dewatering screw, a friction washing machine, a centrifuge and machinery for hot air drying. The PE+AL foil is soaked and sprayed in the mixing screw with the working solution which is heated to the working temperature. This step heats the foil, so that the temperature doesn't drop in the reaction tanks, and makes the foil easier to process and transport. The material is intensively mixed in the working solution in the reaction tank at a given temperature and for a given period such that the PE+AL foil is separated into PE and aluminium flakes and dust. The dewatering screw removes part of the working solution from the processed material. The working solution is then further removed mechanically in the friction washing machine and the centrifuge. At the same time, aluminium flakes and dust are removed from the PE foil in these machines. The aluminium continues to the screw press and is then processed at phase III - processing aluminium. The polyethylene flakes are dried by air. This occurs initially at the ambient temperature in the centrifuge, and then with hot air in a separate section of the line. With certain designs of the invention the air used for drying doesn't need to be cleaned. In another version this air is run off for cleaning. A water or bio filter is used to capture the HCQOH content of the air. With another version of the invention it is possible to clean the remnants of the working solution from the polyethylene after the mechanical drying stage by rinsing with water (instead of the step involving hot air drying).

The formic acid contained in the water in the water filters or rinsing water is treated in a waste water treatment plant or is regenerated by distillation or electro-dialysis, or can be neutralized into sodium formate using sodium hydroxide or sodium bicarbonate. With an advantageous design the sodium formate can be sold as a by-product.

The result of processing the PE+AL foil in the second phase is two fractions, one containing mainly polyethylene (polyethylene flakes contaminated with aluminium and other plastics) and the other containing mainly aluminium (aluminium contaminated with paper fibres and plastics).

In phase III - aluminium processing - the fraction containing mainly aluminium can be processed chemically or by smelting. The input material is the fraction containing mainly aluminium (contaminated with paper fibres and plastics) which is the result of processing the PE+AL foil in phase II. The aluminium processing stage with advantage involves smelting in a protected environment. The advantageous processing of aluminium by smelting involves two steps - drying the material, e.g. in a rotating kiln (under ambient conditions) and melting down the aluminium and burning off the contaminants, e.g. in a batch oven under protected atmospheric conditions. The protected atmospheric conditions in the second step may be created by nitrogen, for example.

Phase IV of the process - polyethylene processing - is performed using polyethylene re-granulation machinery that allows processing material with high amounts of contaminants.

Phase V - processing non-foil plastics which are separated from the foil by air separation, is performed by regular machinery used for recycling plastics contaminated with other materials. The input material at this phase is cleaned of any admixture and processed into regrind or granules.

The final products from processing waste according to the invention are polyethylene granules, non-foil plastic regrind (or granules) containing mainly HDPE and aluminium.

The processing line for performing the method of processing waste from recycling paper from used beverage cartons, especially the processing line performing the method described above, includes phase I machinery - for preparing and sorting the input material and phase II machinery - for separating PE+AL foil into polyethylene and aluminium and their sorting.

The machinery for phase I - preparing and sorting the input material - includes a shredder, the first air separator for eliminating rough waste, dry cleaning machinery, with the advantage a centrifuge for eliminating paper fibre and dust contamination and for reducing the moisture of the material, and in the advantageous design a second air separator for separating non-foil plastic from the foil, a cutting mill for cutting the foil, a third air separator for separating the remaining other plastic from the foil and preferably a fourth air separator for separating the mainly PE foil fraction and the fraction containing mainly PE+AL foil.

The machinery for Phase II - separating PE+AL foil into polyethylene and aluminium and their sorting - includes stirring machinery for performing the reaction between the material and formic acid solution, a set of machinery for mechanically drying the material, with the advantage a draining screw, friction washing machine and centrifuge for reducing the moisture and separating the mainly polyethylene and mainly aluminium fractions, machinery for hot air drying and a set of machinery for preparing and regenerating the formic acid working solution.

The set of machinery for preparing and regenerating the formic acid working solution in Phase II, includes dosing device, collection tanks, a decanter centrifuge, a heat exchanger for heating the working solution and the respective pipe connections for circulating the solution. The working solution which is removed from material with draining screw, friction washing machine and centrifuge is gathered in a collection tank, from which preferably part of it is fed to a decanter centrifuge and part to a second collection tank. The decanter removes any mechanical contaminants (mainly aluminium dust and flakes) which can then be processed in Phase III - aluminium processing. The treated working solution is gathered in a collection tank into which fresh working solution is simultaneously added by a dosing device. The solution is then heated in the tank to the working temperature and fed to the mixing screw and reaction tank.

### Brief description of the drawings

The attached drawings include:

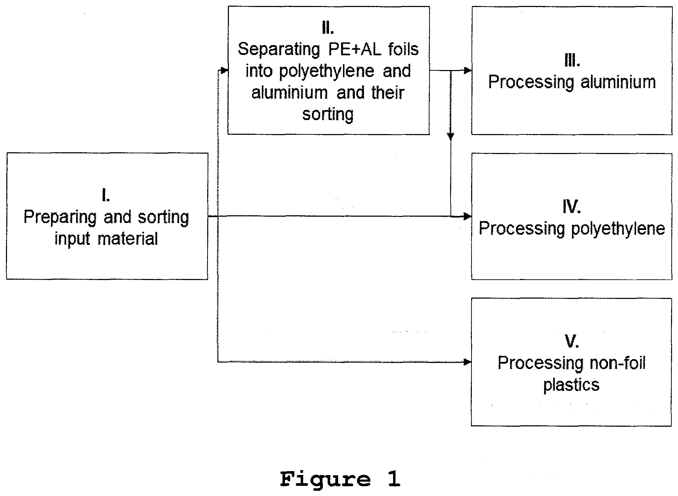

Fig. 1A simplified schematic diagram of the entire process of processing and monetizing waste according to the advantageous design of the invention
Fig. 2 Phase I - preparing and sorting the input material according to the advantageous design of the invention
Fig. 3 Phase II - separating the PE+AL foil into polyethylene and aluminium and their sorting according to the advantageous design of the invention

### Description of the preferred embodiments of the invention

### Example No. 1

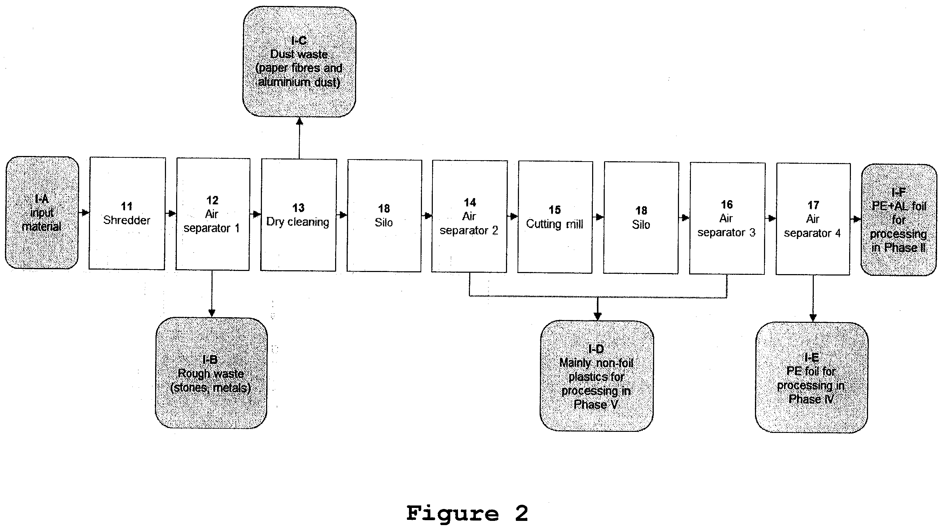

Paper mill waste created after recycling paper fibres from used beverage cartons was processed using the invention method in five phases, on a processing line designed according to the invention in the following manner:
Phase I - preparing and sorting the input material - is set out in the schematic diagram in Fig. No.2. The objective of the Phase I operation was to remove contamination from the I-A input material, dry it and separate it into fraction I-D, containing mainly non-foil plastic, e.g. packaging lids and tops (mostly made from high density polyethylene HDPE), and fraction containing mainly PE and PE+AL foil that can be preferably separated into fraction I-F, containing mainly PE+AL foil made from polyethylene and aluminium and fraction I-E containing mainly PE foil. The main steps in Phase I and the machinery used at the various sections where these steps are performed are described in the following table.

| **Section No.** | **Machine** | **Section description** |
|---|---|---|
| 11 | Shredder | The shredder is used to break down the input material packages and pulverize it into cca 10-20 cm sized flakes. |
| | | This is a regular machine used to crush solid materials. |
| 12 | Air separator | The air separator removes heavy contaminants (e.g. metal, stone, glass) and protects subsequent machinery from damage. |
| 13 | Dry cleaning machine, e.g. centrifuge | Dry cleaning eliminates most of the paper fibre and dust contamination. It also reduces the moisture of the material, improving the sorting quality in the next steps. |
| 14 | Air separator | The air separator step separates non-foil plastic (e.g. lids and tops) from the foil (PE+AL foil and PE foil). A silo is placed before the air separator to ensure a regular flow of material into it and thus high quality sorting. |
| 15 | Cutting mill | In this step the material (mainly foil with remnants of non-foil plastic) is cut into cca 2 cm sized flakes. The uniform flake size makes it possible to sort out the remaining non-foil plastic in the next step. |
| 16 | Air separator | In this step the foil (a mixture of PE and PE+AL foil) is separated from the non-foil plastic. A silo is placed before it to ensure a regular flow of material into the separator and thus high quality sorting. |
| 17 | Air separator | In this step the PE+AL foil and PE foil flakes are separated from each other. This step is advantageous for the industrial application of the technology as it reduces the volume of material which undergoes chemical separation, thus reducing operating and investment costs. |

The result of Phase I waste processing was 5 output fractions (denoted by the Roman numeral I, a hyphen and letters B to F), whose properties are set out in the next table.

| **Fraction No.** | **Material** | **Material description** |
|---|---|---|
| I-A | Input material | Waste consisting of PE+AL foils, PE foils, lids and tops of non-foil plastic, paper fibres and other contaminants, e.g. metals, plastics and textiles. |
| I-B | Rough waste | Waste from heavy materials, e.g. metals, stones, glass. There is low moisture for this fraction. |
| I-C | Dust waste | Waste from dry cleaning made up of mainly paper fibres (> 50 % weight), a mixture of various plastics and aluminium dust. The moisture of this fraction is > 40 % of its weight. |
| I-D | Fraction containing mainly non-foil plastics | A mixture of non-foil plastic (mainly HDPE) contaminated with e.g. other plastics and textiles. The moisture of this fraction is < 5 % of its weight. |
| I-E | Fraction containing mainly PE foil | PE foil contaminated with aluminium (< 3 % weight) and other plastics (< 2 % weight.). The moisture of this fraction is < 5 % of its weight. |
| I-F | Fraction containing mainly PE+AL foil | Foil made up of a number of layers of polyethylene and a layer of aluminium. The moisture of this fraction is < 5 % of its weight. |

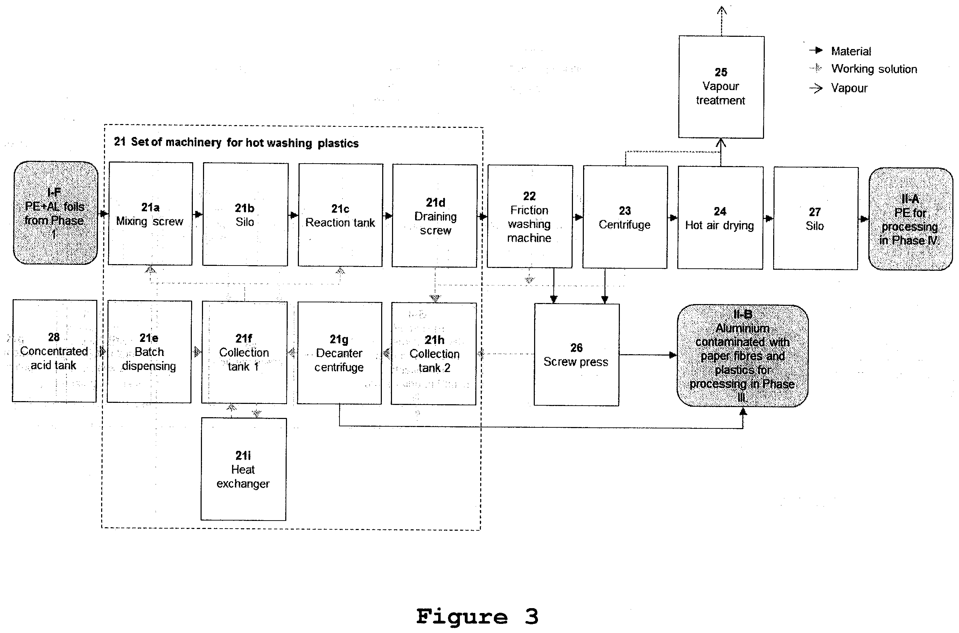

Phase II - separating PE+AL foil into polyethylene and aluminium and their sorting - is schematically set out in Figure No. 3. The main objective of this phase was to breakdown fraction I-F, containing mainly PE+AL foils into fraction II-A containing mainly polyethylene (in flakes) contaminated with remnants of aluminium, paper fibres and other plastics (overall contamination < 5 % weight), and fraction II-B containing mainly aluminium, where this fraction was contaminated with paper fibres and plastics (overall contamination > 30 % weight). These two fractions were separated so that they could be further processed in an advantageous manner. The main steps of Phase II and the machinery used at the different sections where the steps were performed are set out in the following table.

| **Section No.** | **Machine** | **Section description** |
|---|---|---|
| 21 | Set of machinery for hot washing | A set of machines which are normally used for washing soiled plastics (mainly PET) in lye was used to breakdown the PE+AL foil with a formic acid working solution. The different components of the hot washing machinery (21a to 21i) are described in the following tables. |
| 22 | Friction washing machine | A friction washing machine removes the working solution and aluminium (contaminated with plastic and paper fibres) from the polyethylene. |
| 23 | Centrifuge | The centrifuge is the last step of the mechanical drying. At the same time the part of the remaining aluminium is also removed. |
| 24 | Hot air dryer | Hot air drying further reduces the PE foil moisture to ca 2% weight. The low moisture positively influences the following re-granulation process. Also, by reducing the moisture the volume of HCOOH which is carried on through the process is minimized. This is essential for restricting acid vapour (smell) and restricting its corrosive effects further on in the process. The air used during drying is taken off for vapour treatment (see 25) |
| 25 | Filter for treating vapour | A water filter is used to collect HCOOH vapour. The solution is cleaned of acid in a biological waste water treatment plant. Alternatively, the formic acid can be recycled from the water solution by distillation or electro-dialysis. |

The set of hot washing machines, set 21, used in this example is regularly used for washing soiled plastics (mainly PET bottles) in lye. Set 21 was made up of two parts; 1) machinery which processed the material (fraction I-F containing mainly PE+AL foil, and 2) machinery which prepared and regenerated the working solution. These two parts of set 21 are described in more detail in the following table.

The machinery used for processing fraction I-F:

| **Section No.** | **Machine** | **Section description** |
|---|---|---|
| 21 a | Mixing screw | In the mixing screw the PE+AL foil is soaked and sprayed with the working solution which is heated to the working temperature. This step a) heats the foil so there is no drop in temperature in the reaction tanks, and b) improves the foil properties for processing and transporting. |
| 21 b | Silo | From the silo, the foil is divided into the separate reaction tanks - this step is necessary because the reaction tank process (separating PE and AL) is done in batches (all other sections are a continual process). |
| 21c | Reaction tanks | In the reaction tanks the material is intensively stirred in the working solution at a given temperature and for a given period to separate the PE and AL. |
| 21d | Draining screw | In the draining screw part of the working solution is removed from the processed material. |

Machinery for preparing and regenerating the working solution:

| **Section No.** | **Machine** | **Section description** |
|---|---|---|
| 21f | Collection tank 1 | The working solution in the mixing screw and reaction tanks is topped up |
| | | from collection tank 1. The working solution is heated to the required temperature using heat exchanger 21i. The working solution is added to the required level using batch dispensing machine 21e |
| 21h | Collection tank 2 | The working solution from the draining screw 21d, friction washing machine 22, centrifuge 23 and screw press 26 is collected in collection tank2. Part of the solution is then led to the decanter centrifuge 21g and part directly to collection tank 21f. |
| 21g | Decanter centrifuge | The decanter centrifuge removes solid particles (aluminium, plastics and paper fibres) from the working solution. |

The set of hot washing machinery, set 21, used the following method for processing fraction I-F:
The working solution was a 20% formic acid water solution (20% HCOOH and 80% water by weight). The volume ratio of fraction I-F to the working solution was 1:20. Fraction I-F was intensively stirred for 15 minutes at a solution temperature of 50 °C.

The following table sets out the characteristics of the main flow of the material which was the result of processing fraction I-F during Phase II.

| **Fraction No.** | **Material** | **Material description** |
|---|---|---|
| II-A | Fraction containing mainly polyethylene | Polyethylene flakes contaminated with aluminium and other plastics (overall contamination < 2% weight) for processing in Phase IV - polyethylene re-granulation. |
| II-B | Fraction containing mainly aluminium | Aluminium contaminated with paper fibres and plastics for processing in Phase III. |

Fraction II-B containing mainly aluminium was saved for further processing. Fraction II-A containing mainly polyethylene (e.g. in flake form) was processed in Phase IV in re-granulation machinery which contained special filters, enabling material with large amounts of contaminants to be processed, in the case of this example this was up to 5% of the weight. Fraction I-D containing mainly non-foil plastics sorted from the foils in air separators was processed in Phase V, where this processing was performed in a regular manner on regular machinery used for recycling plastics contaminated with other material. At this step of the process the input material was cleaned of any admixture and processed into regrind.

### Example No. 2

Waste from the recycling of paper fibres from used beverage cartons from the Papierfabrik Niderauer Mühle GmbH paper mill was processed on a line designed to perform the invention method in the same way as Example No. 1, where in this case 896 kg of I-A input material with 24% moisture by weight, i.e. 680 kg of dry state material was processed in Phase I - preparation and sorting of input material. Shredder 11, air separator 12, dry cleaning machinery 13, first silo 18, air separator 14, cutting mill 15, second silo 18, and air separators 16 and 17 were used in the Phase I processing.

From processing the I-A input material, 5 kg of rough waste I-B, a mix of heavy materials, e.g. metals, stone and glass was produced. 168 kg of dust waste I-C, a mixture from the dry cleaning made up of mostly, paper fibres, a mix of various plastics and aluminium dust was also obtained. The moisture of the I-C waste was measured at 42 - 43 % by weight, thus the dry weight of the waste was 97 kg. 128 kg of fraction I-D containing mostly non-foil plastic in the form of pieces, a mixture of mainly HDPE contaminated with e.g. foil and textiles was also obtained. 278 kg of fraction I-E was obtained which contained mainly PE foil, a mixture of PE foil contaminated with aluminium and other plastics. The moisture was measured at 3% weight, thus the dry material was 269 kg. There was also 126 kg of fraction IF obtained containing mainly PE+AL foil made of polyethylene and aluminium. The moisture here was measured at 2 - 3%, therefore the dry material weight was 122 kg.

The next step involved processing fraction I-F containing mainly PE+AL foil in Phase II - separating PE+AL foil into polyethylene and aluminium and their sorting. The separation was performed using a formic acid (HCOOH) water solution with a 20% concentration by weight, at 50 °C, for 15 minutes, where the bulk volume of the flake form fraction I-F before processing was 5% of the total volume of flakes and liquid. The quality of fraction II-A containing mainly polyethylene was sufficient for processing in Phase IV. and the quality of fraction II-B containing mainly aluminium contaminated with paper fibres and plastic was sufficient for Phase III processing by smelting aluminium in a protected atmosphere.

### Industrial applicability

The invention method is applicable in the waste recycling industry for processing waste from paper mills which recycle used beverage cartons. Processing and making value from waste and using the processing lines with this method, according to the invention, makes it possible to monetize waste and further use it whilst maintaining low costs.

### List of numbered references

| | | | |
|---|---|---|---|
| 11 | shredder | 21e | batch dispensing |
| 12 | air separator 1 | 21f | collection tank 1 |
| 13 | dry cleaning machine | 21g | decanter centrifuge |
| 14 | air separator 2 | 21h | collection tank 2 |
| 15 | cutting mill | 21i | heat exchanger |
| 16 | air separator 3 | 22 | friction washing machine |
| 17 | air separator 4 | 23 | centrifuge |
| 18 | silo | 24 | hot air drying |
| 21 | hot washing machinery set | 25 | vapour treatment |
| 21a | mixing screw | 26 | screw press |
| 21b | silo | 27 | silo |
| 21c | reaction tank | 28 | concentrated acid tank |
| 21d | draining screw | | |
| I-A | input material | | |
| I-B | rough waste (metals, stones, glass) | | |
| I-C | dust waste (paper fibres, plastics and aluminium dust) | | |
| I-D | fraction containing mainly non-foil plastics | | |
| I-E | fraction containing mainly PE foil | | |
| I-F | fraction containing mainly PE+AL foil | | |
| II-A | fraction containing mainly polyethylene | | |
| II-B | fraction containing mainly aluminium | | |

## Claims

1. Method of processing waste created after recycling paper from used beverage cartons **characterized in that,**
during Phase I - preparing and sorting the input material - the input material (I-A) is shredded and from this shredded material (I-A), rough waste (I-B) made up of heavy materials and dust waste (I-C) is removed, and then the input material (I-A) treated in this way is separated into fraction (I-D), containing mainly non-foil plastics, and fraction containing mainly PE foil and PE+AL foil,
and
during Phase II - separating PE+AL foil into polyethylene and aluminium and their sorting - fraction containing PE+AL foil, undergoes washing in a formic acid water solution and is separated into fraction (II-A), containing mainly polyethylene and fraction (II-B) containing mainly aluminium.

2. The method according to Claim 1, **characterized in that;** during Phase I the fraction (I-E), containing mainly PE foil is further separated from the fraction (I-F), containing mainly PE+AL foil, which always has at least one layer each of polyethylene and aluminium.

3. The method according to Claim 1 or 2, **characterized in that,** it further involves;
Phase III - processing aluminium - in which the fraction containing mainly aluminium (II-B) is processed into aluminium, and/or
Phase IV - processing polyethylene - in which the fraction containing mainly polyethylene (II-A) is processed into polyethylene granules,
and/or
Phase V - processing non-foil plastics - where fraction (I-D) containing mainly non-foil plastics has any admixture removed and is processed into regrind or granules.

4. The method according to Claim 1 or 2 or 3, **characterized in that;**
during Phase I - preparing and sorting the input material - the input material (I-A) is shredded into particles with a maximum size of 20 cm, with the rough waste (I-B) being separated by air sorting, and further the dust waste (I-C) is removed and the moisture of the material reduced by dry cleaning, after which, air sorting separates fraction (I-D), containing mainly non-foil plastics, and the remaining fraction containing mainly PE and PE+AL foil is cut,
and
during Phase II - separating PE+AL foil into polyethylene and aluminium and their sorting - fraction containing PE+AL foil undergoes hot washing in a water-based working solution of 15 to 30 % formic acid by weight at temperatures from 40 to 80 °C, whereby fraction (II-B), containing mainly aluminium in particle form is separated from the working solution by centrifugal treatment.

5. The method according to Claim 4, **characterized in that;** during Phase I - preparing and sorting the input material - the input material (I-A) is shredded in a shredder (11), the rough waste (I-B) is removed in the first air separator (12), the dust waste (I-C) is removed and the moisture content of the material reduced in the dry cleaning machinery (13), after which, in at least one of the air separators (14, 16), fraction (I-D), containing mainly non-foil plastics is removed and the remaining material is cut in a cutting mill (15),
and
during Phase II - separating PE+AL foil into polyethylene and aluminium and their sorting - solid particles are removed from the used working solution by decanting using a decanter centrifuge (21g).

6. The method according to Claim 5 when dependent on Claim 2, **characterized in that;**
during Phase I the remaining material cut in a cutting mill (15) is further separated in the next air separator (17) into fraction (I-E), containing mainly PE foil, and fraction (I-F), containing mainly PE+AL foil.

7. The method according to any of the preceding claims 3 to 6, **characterized in that;**
during Phase III - processing aluminium - fraction (II-B), containing mainly aluminium is initially dried in a rotation kiln and then the aluminium is smelted in a kiln under a protective nitrogen atmosphere.

8. The method according to any of the preceding claims 3 to 7, **characterized in that;**
during Phase IV - processing polyethylene - fraction (II-A), containing mainly polyethylene is processed into polyethylene granules,
and
during Phase V - processing non-foil plastics - fraction (I-D), containing mainly non-foil plastics, has the admixture removed and is processed into regrind or granules.

9. The method according to any of the preceding claims, **characterized in that;**
during Phase II the working solution is a water-based formic acid solution with 15 - 30% formic acid by weight, the ratio of the bulk volume of the input fraction (I-F), containing mainly
PE+AL foil, to the working solution is 1 : 100 to 1 : 10 and the input fraction (I-F) is intensively stirred in the solution for 5 to 30 minutes, with an advantage of 7 to 15 minutes at a working solution temperature of up to 80 °C, with an advantage of 40 °C to 70 °C.

10. Processing line for performing the method of processing the waste created after recycling paper from used beverage cartons according to Claim 1, **characterized in that** it includes; machinery for Phase I - preparing and sorting the input material, which includes a shredder (11), air separator (12) for removing rough waste, dry cleaning machinery (13) for removing paper fibre and dust contamination and for reducing the moisture content of the material, a cutting mill (15) for cutting the foil and at least one air separator (14, 16) for separating the non-foil plastics from the foil,
and
machinery for Phase II, separating PE+AL foil into polyethylene and aluminium and their sorting into fraction (II-A), containing mainly polyethylene and fraction (II-B), containing mainly aluminium, which includes stirring machinery for soaking the PE+AL foil in a working solution heated to a working temperature, a reaction tank (21c) for intensively mixing the PE+AL foil in the working solution, machinery for removing the solution, machinery for separating fraction (II-A), containing mainly polyethylene, and fraction (II-B), containing mainly aluminium, and machinery for regenerating the working solution.

11. The processing line according to Claim 10, **characterized in that;**
the machinery for Phase I - preparing and sorting the input material further includes another air separator (17) for separating fraction (I-E), containing mainly PE foil, and fraction (I-F), containing mainly PE+AL foil.

12. The processing line according to Claim 10 or 11, **characterized in that;**
for Phase II the mixing machinery is designed as a mixing screw (21a), the reaction tank (21c) has dimensions for intensively stirring PE+AL foil in at least ten times the volume of working solution, the machinery for separating the working solution is designed as a draining screw (21d), the machinery for separating fraction (II-A), containing mainly polyethylene, from fraction (II-B), containing mainly aluminium, includes a friction washing machine (22) and centrifuge (23).

13. The processing line according to Claim 10 or 11 or 12, **characterized in that;**
the machinery for regenerating the working solution during Phase II contains a collection tank (21f) for gathering the solution, which is connected by input pipes to the batch dispensing machinery (21e) for delivering formic acid into the working solution and to a decanter centrifuge (21g) for removing aluminium particles and which is connected by output pipes to the mixing screw (21a) and reaction tank (21c), a collection tank (21h) for gathering the working solution, which is connected by input pipes to the draining screw (21d), a friction washing machine (22), a centrifuge (23) and a screw press (26) and which is connected by output pipes to a decanter centrifuge (21g) and a collection tank (21f) and a heat exchanger (21i) for heating the working solution.

14. The processing line according to Claim 12 or 13, **characterized in that;**
during Phase II, hot air drying machinery (24), for drying fraction (II-A), and a screw press (26), for removing remnants of the working solution from fraction (II-B), are connected to the friction washing machine (22) and the centrifuge (23).

15. The processing line according to any of Claims 10 to 14, the processing line **characterized in that** it also includes; machinery for Phase III - processing aluminium - which includes in particular a rotation kiln for drying the material and a batch furnace with a protective atmosphere for smelting the aluminium, and/or
machinery for Phase IV - processing polyethylene - which includes, in particular, an extruder,
and/or
machinery for Phase V - processing non-foil plastics - which includes a shredder, washing machine and air separator.

## Patentansprüche

1. Verfahren zur Verarbeitung von Abfällen, die nach dem Recycling von Papier aus gebrauchten Getränkekartons entstehen, **dadurch gekennzeichnet, dass**
während der Phase I - Vorbereiten und Sortieren des Eingangsmaterials - das Eingangsmaterial (I-A) zerkleinert wird und aus diesem zerkleinerten Material (I-A) Rohabfall (I-B) aus schweren Materialien und Staubabfall (I-C) entfernt werden, und anschließend das auf diese Weise behandelte Eingangsmaterial (I-A) in eine hauptsächlich nichtfolienartige Kunststoffe enthaltende Fraktion (I-D) und eine hauptsächlich PE-Folie und PE+AL-Folie enthaltende Fraktion getrennt wird,
und
während der Phase II - Trennen der PE+AL-Folie in Polyethylen und Aluminium und deren Sortieren - die PE+AL-Folie enthaltende Fraktion in einer Ameisensäurewasserlösung gewaschen wird und in eine hauptsächlich Polyethylen enthaltende Fraktion (II-A) und eine hauptsächlich Aluminium enthaltende Fraktion (II-B) getrennt wird.

2. Das Verfahren nach Anspruch 1, **dadurch gekennzeichnet, dass**
während der Phase I weiter die hauptsächlich PE-Folie enthaltende Fraktion (I-E) von der hauptsächlich PE+AL-Folie enthaltenden Fraktion (I-F) getrennt wird, die immer mindestens jeweils eine Schicht aus Polyethylen und Aluminium aufweist.

3. Das Verfahren nach Anspruch 1 oder 2, **dadurch gekennzeichnet, dass** es weiter;
Phase III - Verarbeitung von Aluminium - in der die hauptsächlich Aluminium enthaltende Fraktion (II-B) zu Aluminium verarbeitet wird,
und/oder
Phase IV - Verarbeitung von Polyethylen - in der die hauptsächlich Polyethylen enthaltende Fraktion (II-A) zu Polyethylen-Granulat verarbeitet wird,
und/oder
Phase V - Verarbeitung von nichtfolienartigen Kunststoffen - in der von der hauptsächlich nichtfolienartige Kunststoffe enthaltenden Fraktion (I-D) jegliche Beimischung entfernt wird und jene Fraktion zu Mahlgut oder Granulat verarbeitet wird,
umfasst.

4. Das Verfahren nach Anspruch 1 oder 2 oder 3, **dadurch gekennzeichnet, dass;**
während der Phase I - Vorbereiten und Sortieren des Eingangsmaterials - das Eingangsmaterial (I-A) in Partikel mit einer maximalen Größe von 20 cm zerkleinert wird, wobei der Rohabfall (I-B) mittels Luftsortierung abgetrennt wird, und daraufhin der Staubabfall (I-C) entfernt und die Feuchtigkeit des Materials durch Trockenreinigung verringert wird, wonach die Luftsortierung die hauptsächlich nichtfolienartige Kunststoffe enthaltende Fraktion (I-D) abtrennt und die verbleibende, hauptsächlich PE- und PE+AL-Folie enthaltende Fraktion geschnitten wird,
und
während der Phase II - Trennen der PE+AL-Folie in Polyethylen und Aluminium und deren Sortieren - die PE+AL-Folie enthaltende Fraktion in einer Arbeitslösung von 15 bis 30 Gew.-% Ameisensäure auf Wasserbasis bei Temperaturen von 40 bis 80 °C heiß gewaschen wird, wobei die hauptsächlich Aluminium in Partikelform enthaltende Fraktion (II-B) durch Zentrifugalbehandlung von der Arbeitslösung abgetrennt wird.

5. Das Verfahren nach Anspruch 4, **dadurch gekennzeichnet, dass;**
während der Phase I - Vorbereiten und Sortieren des Eingangsmaterials - das Eingangsmaterial (I-A) in einem Zerkleinerer (11) zerkleinert wird, der Rohabfall (I-B) in dem ersten Luftabscheider (12) entfernt wird, der Staubabfall (I-C) entfernt und der Feuchtigkeitsgehalt des Materials in der Trockenreinigungsmaschine (13) verringert wird, wonach in mindestens einem Luftabscheider (14, 16) die hauptsächlich nichtfolienartige Kunststoffe enthaltende Fraktion (I-D) entfernt wird und das verbleibende Material in einer Messermühle (15) geschnitten wird,
und
während der Phase II - Trennen der PE+AL-Folie in Polyethylen und Aluminium und deren Sortieren - feste Partikel durch Dekantieren mit einer Dekanterzentrifuge (21g) aus der verwendeten Arbeitslösung entfernt werden.

6. Das Verfahren nach Anspruch 5, wenn er von Anspruch 2 abhängig ist, **dadurch gekennzeichnet, dass;**
während der Phase I das verbleibende, in einer Messermühle (15) geschnittene Material in dem nachgeschalteten Luftabscheider (17) weiter in eine hauptsächlich PE-Folie enthaltende Fraktion (I-E), und eine hauptsächlich PE+AL-Folie enthaltende Fraktion (I-F) getrennt wird.

7. Das Verfahren nach einem der vorhergehenden Ansprüche 3 bis 6, **dadurch gekennzeichnet, dass;**
Während der Phase III - Verarbeitung von Aluminium - die hauptsächlich Aluminium enthaltende Fraktion (II-B) zunächst in einem Drehofen getrocknet wird und dann das Aluminium in einem Ofen unter einer Schutzatmosphäre aus Stickstoff geschmolzen wird.

8. Das Verfahren nach einem der vorhergehenden Ansprüche 3 bis 7, **dadurch gekennzeichnet, dass;**
während der Phase IV - Verarbeitung von Polyethylen - die hauptsächlich Polyethylen enthaltende Fraktion (II-A) zu Polyethylen-Granulat verarbeitet wird,
und
während der Phase V - Verarbeitung von nichtfolienartigen Kunststoffen - von der hauptsächlich nichtfolienartige Kunststoffe enthaltenden Fraktion (I-D) die Beimischung entfernt wird und jene Fraktion zu Mahlgut oder Granulat verarbeitet wird.

9. Das Verfahren nach einem der vorhergehenden Ansprüche, **dadurch gekennzeichnet, dass;**
während der Phase II die Arbeitslösung eine Ameisensäurelösung auf Wasserbasis mit 15 bis 30 Gew.-% Ameisensäure ist, das Verhältnis des Schüttvolumens der hauptsächlich PE+AL-Folie enthaltenden Eingangsfraktion (I-F) zur Arbeitslösung 1 : 100 bis 1 : 10 beträgt und die Eingangsfraktion (I-F) in der Lösung 5 bis 30 Minuten lang intensiv gerührt wird, bevorzugt von 7 bis 15 Minuten bei einer Arbeitslösungstemperatur von bis zu 80 °C, bevorzugt von 40 °C bis 70 °C.

10. Verarbeitungslinie zum Durchführen des Verfahrens gemäß Anspruch 1 zur Verarbeitung von Abfällen, die nach dem Recycling von Papier aus gebrauchten Getränkekartons entstehen, **dadurch gekennzeichnet, dass** sie;
Maschinen für Phase I - Vorbereiten und Sortieren des Eingangsmaterials, einschließlich eines Zerkleinerers (11), eines Luftabscheiders (12) zum Entfernen von Rohabfall, Trockenreinigungsmaschinen (13) zum Entfernen von Papierfaser- und Staubverunreinigungen und zum Reduzieren des Feuchtigkeitsgehalts von dem Material, einer Messermühle (15) zum Schneiden der Folie und mindestens eines Luftabscheiders (14, 16) zum Trennen der nichtfolienartigen Kunststoffe von der Folie,
und
Maschinen für Phase II, Trennen der PE+AL-Folie in Polyethylen und Aluminium und deren Sortieren in eine hauptsächlich Polyethylen enthaltende Fraktion (II-A) und eine hauptsächlich Aluminium enthaltende Fraktion (II-B), einschließlich Rührmaschinen zum Einweichen der PE+AL-Folie in einer auf Arbeitstemperatur erhitzten Arbeitslösung, eines Reaktionstanks (21c) zum intensiven Umrühren der PE+AL-Folie in der Arbeitslösung, Maschinen zum Entfernen der Lösung, Maschinen zum Trennen der hauptsächlich Polyethylen enthaltenden Fraktion (II-A) und der hauptsächlich Aluminium enthaltenden Fraktion (II-B), und Maschinen zum Regenerieren der Arbeitslösung,
umfasst.

11. Die Verarbeitungslinie nach Anspruch 10, **dadurch gekennzeichnet, dass;**
die Maschinen für Phase I - Vorbereiten und Sortieren des Eingangsmaterials weiter einen weiteren Luftabscheider (17) zum Trennen der hauptsächlich PE-Folie enthaltenden Fraktion (I-E) und der hauptsächlich PE+AL-Folie enthaltenden Fraktion (I-F) umfassen.

12. Die Verarbeitungslinie nach Anspruch 10 oder 11, **dadurch gekennzeichnet, dass;**
für Phase II die Rührmaschine als Mischschnecke (21a) ausgelegt ist, der Reaktionstank (21c) zum intensiven Umrühren von PE+AL-Folie in mindestens dem Zehnfachen des Volumens der Arbeitslösung dimensioniert ist, die Maschinen zum Trennen der Arbeitslösung als eine Entwässerungsschnecke (21d) ausgelegt sind, die Maschinen zum Trennen der hauptsächlich Polyethylen enthaltenden Fraktion (II-A) von der hauptsächlich Aluminium enthaltenden Fraktion (II-B) einen Friktionswäscher (22) und eine Zentrifuge (23) umfassen.

13. Die Verarbeitungslinie nach Anspruch 10 oder 11 oder 12, **dadurch gekennzeichnet, dass;**
die Maschinen zum Regenerieren der Arbeitslösung während der Phase II einen Sammeltank (21f) zum Sammeln der Lösung, der über Rohrleitung am Eingang mit der Chargen-Dosiermaschine (21e) zum Dosieren von Ameisensäure in die Arbeitslösung und mit einer Dekanterzentrifuge (21g) zum Entfernen von Aluminiumpartikeln verbunden ist, und der über Rohrleitung am Ausgang mit der Mischschnecke (21a) und dem Reaktionstank (21c) verbunden ist, einen Sammeltank (21h) zum Sammeln der Arbeitslösung, der über Rohrleitung am Eingang mit der Entwässerungsschnecke (21d), einem Friktionswäscher (22), einer Zentrifuge (23) und einer Schneckenpresse (26) verbunden ist, und der über Rohrleitung am Ausgang mit einer Dekanterzentrifuge (21g) und einem Sammeltank (21f) verbunden ist, und einen Wärmetauscher (21i) zum Aufwärmen der Arbeitslösung umfassen.

14. Die Verarbeitungslinie nach Anspruch 12 oder 13, **dadurch gekennzeichnet, dass;**
während der Phase II Heißlufttrocknungsmaschinen (24) zum Trocknen der Fraktion (II-A) und eine Schneckenpresse (26) zum Entfernen von Überresten der Arbeitslösung aus der Fraktion (II-B) mit dem Friktionswäscher (22) und der Zentrifuge (23) verbunden sind.

15. Die Verarbeitungslinie nach einem der Ansprüche 10 bis 14, wobei diese Verarbeitungslinie **dadurch gekennzeichnet ist, dass** sie weiter;
Maschinen für Phase III - Verarbeitung von Aluminium - die insbesondere einen Drehofen zum Trocknen des Materials und einen Kammerofen mit einer Schutzatmosphäre zum Schmelzen von Aluminium umfassen;
und/oder
Maschinen für Phase IV - Verarbeitung von Polyethylen - die insbesondere einen Extruder umfassen,
und/oder
Maschinen für Phase V - Verarbeitung von nichtfolienartigen Kunststoffen - die einen Zerkleinerer, einen Wäscher und einen Luftabscheider umfassen,
umfasst.

## Revendications

1. Procédé de traitement des déchets se produisant après le recyclage du papier de cartons à boissons usagées, **caractérisé en ce que,**
lors de l'étape I de préparation et de tri de matières premières, les matières premières (I-A) sont broyées, et desdites matières broyées (I-A), les déchets bruts (I-B) constitués de matériaux lourds et les déchets de poussières (I-C) sont éliminés, lesdites matières premières (I-A) ainsi traitées sont séparées en fraction (I-D) contenant principalement des matières plastiques autres que des feuilles, et en fraction contenant principalement les feuilles PE et les feuilles PE + AL,
et
lors de l'étape II de séparation des feuilles PE + AL en polyéthylène et en aluminium et de leur triage, la fraction contenant des feuilles PE + AL est soumise à un lavage dans une solution aqueuse d'acide formique et est séparée en fraction (II-A) contenant principalement du polyéthylène et en fraction (II-B) contenant principalement de l'aluminium.

2. Procédé selon la revendication 1, **caractérisé en ce que** lors de l'étape I, on sépare, en outre, la fraction (I-E) contenant principalement des feuilles PE et la fraction (I-F) contenant principalement des feuilles PE + AL, qui comportent toujours au moins une couche de polyéthylène et une couche d'aluminium.

3. Procédé selon la revendication 1 ou 2, **caractérisé en ce qu'**il comporte en outre l'étape III de traitement de l'aluminium lors de laquelle la fraction (II-B) contenant principalement de l'aluminium est transformée en aluminium,
et/ou
l'étape IV de traitement du polyéthylène lors de laquelle la fraction (II-A) contenant principalement du polyéthylène est transformée en granulés de polyéthylène,
et/ou
l'étape V de traitement des matières plastiques autres que des feuilles lors de laquelle on élimine des adjuvants de la fraction (I-D) contenant principalement des matières plastiques autres que des feuilles et on la transforme en broyat ou en granulés.

4. Procédé selon la revendication 1 ou 2 ou 3, **caractérisé en ce que** lors de l'étape I de préparation et de tri de matières premières, les matières premières (I-A) sont broyées en particules d'une taille maximale de 20 cm, puis on élimine les déchets bruts (I-B) à l'aide d'une classification pneumatique, ensuite on élimine les déchets de poussières (I-C) par épuration par voie sèche et on réduit l'humidité de la matière, ensuite on sépare la fraction (I-D) contenant principalement des matières plastiques autres que les feuilles à l'aide d'une classification pneumatique et on découpe la fraction restante contenant principalement des feuilles PE et PE + AL,
et
lors de l'étape II de séparation des feuilles PE + AL en polyéthylène et en aluminium et de leur triage, la fraction contenant des feuilles PE + AL est soumise à un lavage à chaud dans une solution de travail d'acide formique à l'eau en poids en acide formique de 15 à 30 % à une température allant de 40 à 80 °C, après quoi la fraction (II-B) contenant principalement de l'aluminium sous forme de particules solides est séparée de la solution de travail par centrifugation.

5. Procédé selon la revendication 4, **caractérisé en ce que**
lors de l'étape I de préparation et de tri de matières premières, les matières premières (I-A) sont broyées dans un broyeur (11), puis on élimine les déchets bruts (I-B) dans le premier classeur pneumatique (12), ensuite on enlève les déchets de poussières (I-C) et on réduit l'humidité de la matière dans un épurateur par voie sèche (13), après quoi on sépare la fraction (I-D) contenant principalement des matières plastiques autres que des feuilles dans au moins l'un des classeurs pneumatiques (14, 16) et on découpe la matière restante dans un broyeur à couteaux (15),
et
lors de l'étape II de séparation de feuilles PE + AL en polyéthylène et en aluminium et de leur triage, on élimine les particules solides de la solution de travail utilisée par décantation à l'aide d'un décanteur centrifuge (21g).

6. Procédé selon la revendication 5 dépendant de la revendication 2, **caractérisé en ce que**
lors de l'étape I, la matière restante découpée dans le broyeur à couteaux (15) est en outre séparée dans un autre classeur pneumatique (17) en fraction (I-E) contenant principalement des feuilles PE et en fraction (I-F) contenant principalement des feuilles PE + AL.

7. Procédé selon l'une quelconque des revendications 3 à 6 précédentes, **caractérisé en ce que**
lors de l'étape III de traitement de l'aluminium, on sèche d'abord la fraction (II-B) contenant principalement de l'aluminium dans un four rotatif, puis on fond de l'aluminium dans un four sous atmosphère contrôlée d'azote.

8. Procédé selon l'une quelconque des revendications 3 à 7 précédentes, **caractérisé en ce que**
lors de l'étape IV de traitement du polyéthylène, on transforme la fraction (II-A) contenant principalement du polyéthylène en granulés de polyéthylène, et
lors de l'étape V de traitement des matières plastiques autres que des feuilles, on élimine les adjuvants de la fraction (I-D) contenant principalement des matières plastiques autres que des feuilles et on la transforme en broyat ou en granulés.

9. Procédé selon l'une quelconque des revendications précédentes, **caractérisé en ce que** lors de l'étape II, la solution de travail est une solution aqueuse d'acide formique en poids en acide formique de 15 à 30 %, le rapport d'un volume apparent de la fraction admise (IF) contenant principalement des feuilles PE + AL à la solution de travail est de 1 : 100 à 1 : 10, et on maintient la fraction admise (IF) sous agitation intensive dans la solution pendant 5 à 30 minutes, avantageusement de 7 à 15 minutes à une température de solution de travail allant jusqu'à 80 °C, de manière avantageuse de 40 °C à 70 °C.

10. Ligne de traitement pour mettre en œuvre le procédé de traitement des déchets se produisant après le recyclage du papier de cartons à boissons usagées selon la revendication 1, **caractérisée en ce qu'**elle comprend
un dispositif, pour la mise en œuvre de l'étape I de préparation et de tri de matières premières, qui comprend un broyeur (11), un classeur pneumatique (12) pour éliminer les déchets bruts, un épurateur par voie sèche (13) pour éliminer la contamination par les fibres de papier et par la poussière et pour réduire l'humidité de la matière, un broyeur à couteaux (15) pour découper les feuilles et au moins un classeur pneumatique (14, 16) pour séparer les matières plastiques autres que des feuilles de feuilles plastiques,
et
un dispositif, pour la mise en œuvre de l'étape II de séparation des feuilles PE + AL en polyéthylène et en aluminium et de leur triage en fraction (II-A) contenant principalement du polyéthylène et en fraction (II-B) contenant principalement de l'aluminium, qui comprend un agitateur pour tremper les feuilles PE + AL dans la solution de travail chauffée à une température de travail, un récipient de réaction (21c) pour agiter intensivement les feuilles PE + AL dans la solution de travail, un dispositif d'élimination de la solution de travail, un dispositif de séparation de la fraction (II-A) contenant principalement du polyéthylène et de la fraction (II-B) contenant principalement de l'aluminium, et un dispositif de régénération de la solution de travail.

11. Ligne de traitement selon la revendication 10, **caractérisée en ce que** le dispositif pour la mise en œuvre de l'étape I de préparation et de tri de matières premières comprend en plus un autre classeur pneumatique (17) pour séparer la fraction (I-E) contenant principalement des feuilles PE et la fraction (I-F) contenant principalement des feuilles PE + AL.

12. Ligne de traitement selon la revendication 10 ou 11, **caractérisée en ce qu'** à l'étape II, l'agitateur est conçu comme un mélangeur à vis (21a), le réservoir de réaction (21c) a des dimensions pour une agitation intensive des feuilles PE + AL dans un volume au moins dix fois supérieur à la solution de travail, le dispositif d'élimination de la solution de travail est conçu comme une vis d'égouttage (21d), le dispositif de séparation de la fraction (II-A) contenant principalement du polyéthylène et de la fraction (II-B) contenant principalement de l'aluminium comprend un laveur à friction (22) et une centrifugeuse (23).

13. Ligne de traitement selon la revendication 10 ou 11 ou 12, **caractérisée en ce que** le dispositif de régénération de la solution de travail à l'étape II comprend un réservoir collecteur (21f) pour la récupération de la solution de travail qui est, à l'entrée, raccordé par l'intermédiaire d'un tuyau au dispositif de dosage (21e) pour le dosage de l'acide formique dans la solution de travail et au décanteur centrifuge (21g) pour l'élimination des particules d'aluminium, et qui est, à la sortie, raccordé par l'intermédiaire d'un tuyau au mélangeur à vis (21a) et au réservoir de réaction (21c), un réservoir collecteur (21h) pour la récupération de la solution de travail qui est, à l'entrée, raccordé par l'intermédiaire d'un tuyau à la vis d'égouttage (21d), au laveur à friction (22) et à la centrifugeuse (23) et à la presse à vis (26), qui est, à la sortie, raccordé par l'intermédiaire d'un tuyau au décanteur centrifuge (21g) et au réservoir collecteur (21f), et un échangeur de chaleur (21i) pour le chauffage de la solution de travail.

14. Ligne de traitement selon la revendication 12 ou 13, **caractérisée en ce qu'** à l'étape II, un dispositif de séchage à air chaud (24) pour sécher la fraction (II-A) et une presse à vis (26) pour éliminer les restes de la solution de travail de la fraction (II-B) suivent en aval du laveur à friction (22) et de la centrifugeuse (23).

15. Ligne de traitement selon l'une des revendications 10 à 14, **caractérisée en ce qu'elle** comprend en plus :
le dispositif pour la mise en œuvre de l'étape III de traitement de l'aluminium qui comprend notamment un four rotatif pour le séchage de la matière et un four à charge sous atmosphère contrôlée pour la fusion de l'aluminium, et/ou
le dispositif pour la mise en œuvre de l'étape IV de traitement du polyéthylène qui comprend notamment une extrudeuse, et/ou
le dispositif pour la mise en œuvre de l'étape V de traitement des matières plastiques autres que des feuilles qui comprend notamment un broyeur, un laveur et un classeur pneumatique.
